# EUROPÄISCHE PATENTSCHRIFT

(11) **EP 2 046 670 B1**
(45) Veröffentlichungstag und Bekanntmachung des Hinweises auf die Patenterteilung: **21.11.2012**
(21) Anmeldenummer: 07764982.0
(22) Anmeldetag: 02.07.2007
(51) Int. Cl.: B65G 47/51, B65G 47/84

(54) **FÖRDEREINRICHTUNG**
CONVEYING DEVICE
DISPOSITIF DE TRANSPORT

(30) Priorität: 29.07.2006 DE 102006035109
(43) Veröffentlichungstag der Anmeldung: 15.04.2009
(73) Patentinhaber: KRONES Aktiengesellschaft, 93073 Neutraubling (DE)
(72) Erfinder: HAHN, Wolfgang, 93073 Neutraubling (DE)
(86) Internationale Anmeldenummer: PCT/EP2007/005824
(87) Internationale Veröffentlichungsnummer: WO 2008/014857

(56) Entgegenhaltungen:
- DE-A1- 19 824 846
- DE-A1- 19 928 325
- DE-U1- 29 913 237
- DE-U1-202006 003 690
- US-A- 5 996 322
- US-B1- 6 168 004
- US-B1- 6 446 781

## Beschreibung

Die Erfindung bezieht sich auf eine Fördereinrichtung für Gegenstände, insbesondere für Flaschen, der im Oberbegriff von Anspruch 1 erläuterten Art.

Eine derartige Fördereinrichtung ist aus der DE 198 24 846 bekannt. Die bekannte Fördereinrichtung ist zwischen einer Blasmaschine zum Herstellen von Kunststoffflaschen und einer Füllmaschine zum Füllen dieser Flaschen angeordnet. Die Fördereinrichtung enthält einen Puffer zum zeitweiligen Zwischenspeichern von Flaschen sowie eine Vielzahl von Sternförderern. Insbesondere ist ein Transferstern vorgesehen, über den sowohl das Be- und Entladen des Puffers als auch die Direktförderung zwischen beiden Maschinen ohne Verwendung des Puffers läuft. Der Transferstern steht mit jeweils einer Transferstelle mit dem Auslaufförderer der Blasmaschine und dem Einlassförderer der Füllmaschine in Verbindung. Der Transferstern steht weiterhin über eine dritte Transferstelle mit dem Puffer (über einen Be- und Entladestern) in Verbindung. Dieser Be- und Entladestern wird unwirksam geschaltet, wenn eine Direktförderung zwischen den Maschinen möglich ist. Diese konstruktive Ausgestaltung wirkt jedoch relativ starr und funktioniert nur, wenn die Fördergeschwindigkeiten beidseitig des Transfersterns gleich sind.

Darüber hinaus offenbart die DE 199 28 325 A1 eine Abfüllvorrichtung für Flaschen, bei der bewusst auf einen Puffer verzichtet wird. Sollte allerdings Bedarf bestehen, können frisch geblasene Flaschen vor der Spülmaschine an einer Stelle aus- und an anderer Stelle wieder eingeschleust werden. Dies geschieht mit einem einreihigen Förderer, der jeweils im Übergabebereich zwischen zwei Transportsternen tangential angeordnet ist, um die Flaschen an diesen Stellen ein- bzw. ausschleusen zu können.

In einem weiteren Ausführungsbeispiel ist der Be- und Entladestern durch einen Transporteur ersetzt, der in der Art einer Weiche schwenkbar ist. In einer ersten Stellung verbindet der Transporteur den Transferstern mit dem Puffer und in einer zweiten Stellung verbindet der Transporteur den Transferstern mit dem Einlauf der stromabwärtigen Maschine für eine Direktförderung. Auch diese Ausführungsform ist auf gleiche Geschwindigkeiten angewiesen. Darüber hinaus erfordert das Entleeren des Puffers eine Förderrichtungsumkehr, die relativ schwierig zu steuern ist.

Eine Fördereinrichtung, die eine Abzweigung in einen Puffer nach Art einer Weiche verwendet, ist beispielsweise auch aus der US 6 152 291 bekannt. Die Fördereinrichtung enthält einen Linearförderer in Form eines Förderbands, das über jeweils eine Art Weiche mit einem Einlassförderer und einem Auslassförderer eines dynamischen Puffers verbunden ist. Während die Einlass- und Auslassförderer des Puffers mit unterschiedlicher Geschwindigkeit laufen können, ist die Geschwindigkeit, mit der vom Linearförderer an die erste Weiche heran- und von der zweiten Weiche weg gefördert werden kann, durch die direkte Verbindung über das durchgehende Förderband festgelegt.

Der Erfindung liegt die Aufgabe zugrunde, eine Fördereinrichtung bereitzustellen, die flexibler an die unterschiedlichen Förderzustände anpassbar ist.

Diese Aufgabe wird durch die im Anspruch 1 angegebenen Merkmale gelöst.

Durch die erfindungsgemäße Ausgestaltung wird eine Fördereinrichtung geschaffen, die den ersten und den zweiten Förderer so miteinander verbindet, dass beide, beispielsweise zum Entleeren des Puffers, mit unterschiedlichen Geschwindigkeiten laufen können. Trotzdem ist auch ein Synchronbetrieb beider Förderer möglich. Die erfindungsgemäße Fördereinrichtung bietet somit eine erhöhte Flexibilität, die beispielsweise zur Erhöhung der Fördergeschwindigkeit und des Durchsatzes ausgenutzt werden kann. Hinzu kommen geringere Produktionsverluste durch schnellere Regeneration des Puffers bzw. früheres Zuschalten der vorgeschalteten Maschine.

Vorteilhafte Weiterbildungen der Erfindung sind den Unteransprüchen zu entnehmen.

Der verwendete Puffer ist bevorzugt ein dynamischer Puffer, d.h. ein Puffer mit veränderlicher Pufferkapazität und der Möglichkeit, unterschiedliche Einlass- und Auslassgeschwindigkeiten bei gleichzeitigem Einlass und Auslass zu verwirklichen und trotzdem sicherzustellen, dass der zuerst in den Puffer eingetretene Gegenstand auch zuerst wieder entnommen wird (first in - first out). Geeignet sind jedoch alle Förderer, insbesondere dann, wenn sie eine Abkopplung des ersten Förderers vom zweiten Förderer im Hinblick auf ihre Fördergeschwindigkeit gestatten.

Der Zwischenförderer und/oder der erste und der zweite Förderer sind bevorzugt als Sternförderer ausgebildet, da sich damit die erfindungsgemäßen Förderaufgaben konstruktiv besonders einfach lösen lassen.

Der Zwischenförderer ist schaltbar, d.h. er kann sich bei Bedarf aus seiner Förderaufgabe zurückziehen, oder diese wieder aufnehmen. Bevorzugt wird dies dadurch erreicht, dass die Aufnahmeeinrichtungen für die Gegenstände an den Transferstellen unwirksam gemacht werden, beispielsweise indem die Aufnahmeeinrichtungen aus ihrer Aufnahmeposition zurückgezogen werden. Nach Bedarf unwirksam zu schaltende Aufnahmeeinrichtungen sind im Stand der Technik bekannt.

Die erfindungsgemäße Fördereinrichtung ist mit besonderem Vorteil in einer Vorrichtung zum Handhaben von Flaschen zu verwenden. Die heute üblichen Anlagen für die Handhabung von Kunststoffflaschen, die die Herstellung, die Befüllung, das Verschließen, die Etikettierung und die Verpackung derartiger Kunststoffflaschen, beispielsweise von PET-Flaschen, umfassen, müssen für einen großen Durchsatz ausgelegt werden und sind um so wirtschaftlicher, um so schneller und um so weniger störanfällig sie laufen. Die erfindungsgemäße Fördereinrichtung bietet die Möglichkeit, flexibel beispielsweise auf eventuelle Störfälle zu reagieren und den Produktionsausfall, der durch diese Störfälle verursacht wird, so klein wie möglich zu halten.

Neben der reinen Pufferfunktion, die auch im Stand der Technik gegeben ist, ist es mit der erfindungsgemäßen Fördereinrichtung möglich, den Puffer flexibel zu nutzen, da beide Förderer über jeweils eine eigene Transferstelle mit dem Puffer verbunden sind, während der Zwischenförderer bei Pufferbetrieb völlig aus der Förderlinie genommen ist und erst dann wieder Förderaufgaben übernimmt, wenn der Puffer bei einer Direktförderung überbrückt wird. Wird der Puffer überbrückt, so muss er andererseits nicht mitlaufen, was den Verschleiß des Puffers stark herabsetzt.

Bei einer Anlage für eine Flaschenhandhabung treten die größten Schäden auf, wenn die Blasmaschine korrekt arbeitet aber irgendeine Vorrichtung hinter der Blasmaschine stillsteht. Um in diesem Falle zu verhindern, dass die sich gerade in der Blasmaschine befindenden Preforms nicht mehr zu fertigen Flaschen weiterbearbeitet werden können, und demzufolge verworfen werden müssen, kann die erfindungsgemäße Fördereinrichtung mit Vorteil zwischen der Blasmaschine und irgendeiner der nachfolgenden Maschinen, beispielsweise einem Füller, angeordnet sein, so dass die Blasmaschine die gerade in Arbeit befindlichen Preforms fertigstellen und im Puffer zwischenlagern kann. Ist dann die Störung behoben, so kann die Blasmaschine wieder anlaufen, noch während der Puffer geleert wird, so dass deren Stillstandszeit verringert und der Anlagenwirkungsgrad erhöht wird. Läuft dann die Entleerung des Puffers schneller als dessen Neubefüllung, so kann irgendwann wieder der Zwischenförderer eingeschaltet werden und der Puffer außer Betrieb gesetzt werden, was dessen Verschleiß verringert.

Ausführungsbeispiele der Erfindung werden nachfolgend anhand der Zeichnungen näher erläutert. Es zeigen:
- Fig. 1: eine schematische Funktionsdarstellung eines ersten Ausführungsbeispiels einer erfindungsgemäßen Fördereinrichtung, und
- Fig. 2: eine schematische Funktionsdarstellung eines zweiten Ausführungsbeispiels der Erfindung.

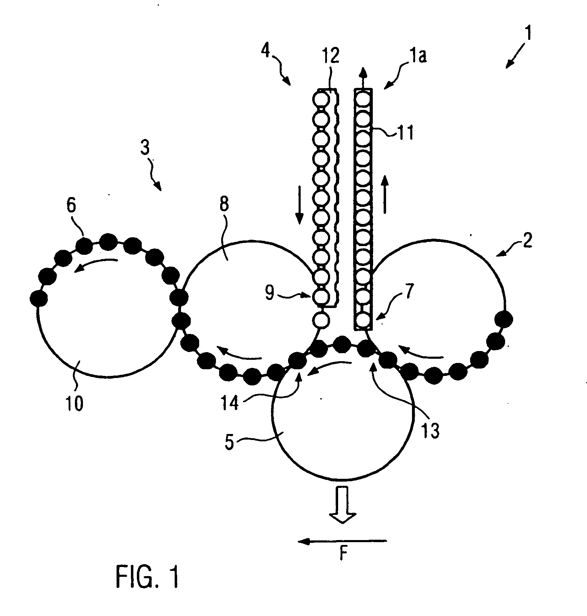

Fig. 1 zeigt in stark schematisierter Darstellung ein erstes Ausführungsbeispiel 1a einer erfindungsgemäßen Fördereinrichtung 1. Die Fördereinrichtung 1 enthält einen ersten Förderer 2, einen zweiten Förderer 3, einen Puffer 4 und einen Zwischenförderer 5, die alle auf die Förderung von Gegenständen 6, beispielsweise Flaschen und insbesondere PET-Flaschen, ausgelegt sind, die in einer vorbestimmten Förderrichtung F durch die Fördereinrichtung 1 geschleust werden.

Der erste Förderer 2 ist im dargestellten Ausführungsbeispiel als einer der üblichen Fördersterne oder Rotoren ausgebildet, wie sie beispielsweise in Handhabungsanlagen für (Kunststoff)-Flaschen, insbesondere PET-Flaschen eingesetzt werden und die Flaschen am Hals hängend fördern (Neck-Handling). Der erste Förderer 2 ist hier nur als einziger Förderer dargestellt, je nach Anlagengestaltung kann der erste Förderer 2 jedoch eine Mehrzahl von Fördersternen oder Rotoren oder anderen Förderern enthalten oder direkt als Ausgabeeinrichtung einer Handhabungsmaschine für die Flaschen ausgebildet sein. Im dargestellten Ausführungsbeispiel enthält der erste Förderer 2 einen Auslaufstern, der eine stromaufwärtige Maschine, beispielsweise eine Blasformmaschine zum Herstellen von (PET)-Kunststoffflaschen über eine erste Transferstelle 7 mit dem Puffer 4 verbindet, an der Gegenstände 6 vom ersten Förderer 2 an den Puffer 4 übergeben werden können. Die konstruktive Ausgestaltung derartiger Transferstellen ist im Stand der Technik bekannt.

Der zweite Förderer 3 enthält im dargestellten Ausführungsbeispiel ebenfalls einen Förderstern 8, der über eine erste Transferstelle 9 mit dem Puffer 4 in Verbindung steht. Im dargestellten Ausführungsbeispiel ist der erste Förderstern 8 ein Teilungsverzugsstern, der in der Lage ist, die Abstände zwischen aufeinanderfolgend geförderten Gegenständen 6 zu verringern oder zu vergrößern. Der zweite Förderer 3 enthält weiterhin einen zweiten Förderstern 10, der sich an den ersten Förderstern 8 anschließt und als Einlaufstern für eine nachfolgende Maschine, beispielsweise einen Flaschenfüller, wirkt. Auch die Ausgestaltung des zweiten Förderers kann beliebig sein, entsprechend den jeweiligen Gegebenheiten. So kann der Teilungsverzugsstern entfallen und der Einlaufstern der nachfolgenden Maschine direkt über die erste Transferstelle 9 mit dem Puffer 4 verbunden sein.

Der Puffer 4 kann im einfachsten Falle eine Förderschleife sein; er sollte jedoch staufähig sein, d.h. er sollte in der Lage sein, den Abstand zwischen den Gegenständen auf Null zu reduzieren, so dass die Gegenstände 6 vom zweiten Förderer 3 mit einer höheren Geschwindigkeit aus dem Puffer 4 abgezogen werden können (unter Wiederherstellung von Abständen zwischen benachbarten Gegenständen), als dies der Fördergeschwindigkeit des Puffers 4 und/oder der Geschwindigkeit des ersten Förderers 2 entspricht.

Im dargestellten Ausführungsbeispiel enthält der Puffer 4 ein einfaches Förderband 11, auf das die Gegenstände 6, beispielsweise die Flaschen, an der Transferstelle 7 vom ersten Förderer 2 abgestellt werden (stehende Förderung), und das so betrieben wird, dass die Abstände zwischen den Gegenständen 6 eliminiert werden.

Der Puffer 4 enthält weiterhin eine übliche Förderschnecke 12, die die Gegenstände 6 aufnimmt und in definierter Weise der ersten Transferstelle 9 zum zweiten Förderer 3 zuführt, wobei bereits ein Abstand zwischen den Gegenständen erzeugt wird, der ausreicht, dass die Gegenstände 6 vom zweiten Förderer 3 ergriffen und abtransportiert werden können. Dieser Abstand wird dann durch den Teilungsverzugsstern 8 auf den korrekten Wert eingestellt, bevor die Gegenstände dem Einlaufstern 10 übergeben werden.

Der Zwischenförderer 5 ist ebenfalls als Förderstern, bevorzugt der gleichen Art wie die Fördersterne der ersten und zweiten Förderer 2, 3 ausgebildet. Sind die Gegenstände 6 PET-Flaschen, so ist der Zwischenförderer 5 für eine hängende Förderung der Flaschen durch Ergreifen am Hals ausgebildet. Der Zwischenförderer kann jedoch auch beispielsweise eine Taschenkette oder eine Schnecke oder dergleichen sein.

Der Zwischenförderer 5 ist so ausgebildet, dass er sowohl mit dem ersten Förderer 2 eine zweite Transferstelle 13 als auch mit dem zweiten Förderer 3 eine zweite Transferstelle 14 ausbildet. Die Transferstellen 13 und 14 liegen bevorzugt eng beieinander. Der Zwischenförderer 5 ist schaltbar, d.h. er ist aus einem Zustand, in dem die zweiten Transferstellen 13, 14 in der Lage sind, Gegenstände 6 zu übernehmen und zu übergeben, in einen Zustand bringbar, in dem die Transferstellen 13, 14 unwirksam sind, d.h. keine Gegenstände übernehmen und/oder übergeben können. Bevorzugt wird dies dadurch erreicht, dass Aufnahmeeinrichtungen für die Gegenstände, also beispielsweise Greifer oder dgl., die am Zwischenförderer 5 vorgesehen sind, aus ihrer wirksamen Position zurückgezogen werden, was beispielsweise durch eine gesteuerte radiale Bewegung geschehen kann. Derartige zurückziehbare Aufnahmeeinrichtungen sind jedoch im Stand der Technik bekannt und müssen hier nicht näher erläutert werden. Alternativ ist es auch möglich, den Zwischenförderer 5 vom ersten und zweiten Förderer 2, 3 weg zu bewegen.

Die Transferstellen 7, 9, 13 und 14 mit den ersten und zweiten Förderern 2, 3 sind so angeordnet, dass die zweite Transferstelle 13 zwischen dem Zwischenförderer 5 und dem ersten Förderer 2 in Förderrichtung vor der ersten Transferstelle 7 zwischen dem ersten Förderer 2 und dem Puffer 4 liegt. Die erste Transferstelle 9 zwischen dem Puffer 4 und dem zweiten Förderer 3 liegt hingegen in Förderrichtung vor der zweiten Transferstelle 14 zwischen dem zweiten Förderer 3 und dem Zwischenförderer 5. Die Gegenstände 6 auf dem ersten Förderer 2 müssen somit die Transferstelle 13 zum Zwischenförderer 5 passieren, bevor sie auf den Puffer 4 gelangen; und passieren zunächst die erste Transferstelle 9 zum zweiten Förderer 3, bevor sie die zweite Transferstelle 14 vom zweiten Förderer 3 zum Zwischenförderer 5 passieren.

Im Betrieb des Ausführungsbeispiels 1a der erfindungsgemäßen Fördereinrichtung 1 werden dem zweiten Förderer 2 Gegenstände zugeführt, beispielsweise erhält der zweite Förderer 2 Flaschen aus einer Blasformmaschine zum Herstellen von PET-Kunststoffflaschen. Der zweite Förderer 2 trägt die Gegenstände 6 in Förderrichtung F, dargestellt durch einen Rotationspfeil, zur Transferstelle 13 mit dem Zwischenförderer 5. Es soll Normalbetrieb angenommen werden, d.h. der Puffer wird nicht benötigt. In diesem Falle werden die Gegenstände 6 an der Transferstelle 13 auf die wirksam gemachten Aufnahmeeinrichtungen des Zwischenförderers 5 übergeben und von diesem in Förderrichtung F (Rotationspfeil) zur Transferstelle 14 des synchron und mit gleicher Leistung angetriebenen zweiten Förderers 3 gebracht, wie dies durch die geschwärzten Kreise angedeutet ist. An der zweiten Transferstelle 14 werden die Gegenstände auf den zweiten Förderer 3, im dargestellten Ausführungsbeispiel den Teilungsverzugsstern 8, übergeben, der sie wiederum an den Einlaufstern 10 übergibt. Von dort gelangen sie in die nächste Maschine, beispielsweise einen Flaschenfüller.

In diesem Falle laufen die Gegenstände 6 im Direkttransport durch die erfindungsgemäße Fördereinrichtung 1, während sich an den ersten Transferstellen 7, 9 keine Gegenstände befinden, die auf den Puffer 4 übergeben werden können. Durch geeignete Ausgestaltung der Transferstellen 7 und 9 kann der Puffer 4 somit stillgesetzt werden. Blasformmaschine und Flaschenfüller laufen synchron mit gleicher Leistung.

Tritt irgendeine Störung auf, die die Verwendung des Puffers 4 notwendig macht, z.B. ein Stillstand des Flaschenfüllers, so wird der Zwischenförderer 5 geschaltet, d.h. in einen Zustand gebracht, bei dem die zweiten Transferstellen 13, 14 unwirksam sind. In diesem Zustand laufen die Gegenstände 6 auf dem ersten Förderer 2 bis zur ersten Transferstelle 7 mit dem Puffer 4 weiter und werden dort auf den Puffer 4 übergeben, wie dies durch die leeren Kreise angedeutet wird. Dies wird solange fortgeführt, bis der Puffer 4 voll bzw. die Störung behoben ist. Gegebenenfalls werden die auf dem Zwischenförderer 5 zwischen den Transferstellen 13 und 14 verbliebenen Gegenstände 6 ausgeschleust. Der Zwischenförderer 5 kann stillgesetzt werden.

Läuft der Normalbetrieb wieder an, z.B. nach Behebung der Störung am Flaschenfüller, so wird zunächst der Puffer 4 entleert. Dies geschieht bei unwirksamen Transferstellen 13 und 14 dadurch, dass der zweite Förderer 3 seinen Betrieb wieder aufnimmt. Gleichzeitig kann jedoch auch der erste Förderer 2 seinen Normalbetrieb wieder aufnehmen und die vom zweiten Förderer 3 aus dem Puffer 4 abgezogenen Gegenstände zumindest teilweise nachliefern. Der zweite Förderer 3 kann durch seine direkte Anbindung an den Puffer 4 mit einer höheren Geschwindigkeit laufen als der erste Förderer 2, so dass trotz Nachlieferung der Puffer 4 nach und nach entleert wird. Ist der Puffer 4 leer, so wird ggf. nach Geschwindigkeitsreduzierung des zweiten Förderers 3 der Zwischenförderer 5 zugeschaltet, d. h. die zweiten Transferstellen 13 und 14 aktiviert, so dass auf Direktförderung unter Umgehung des Puffers 4 und Synchronbetrieb (gleiche Geschwindigkeit) umgeschaltet und der Puffer 4 somit stillgesetzt werden kann.

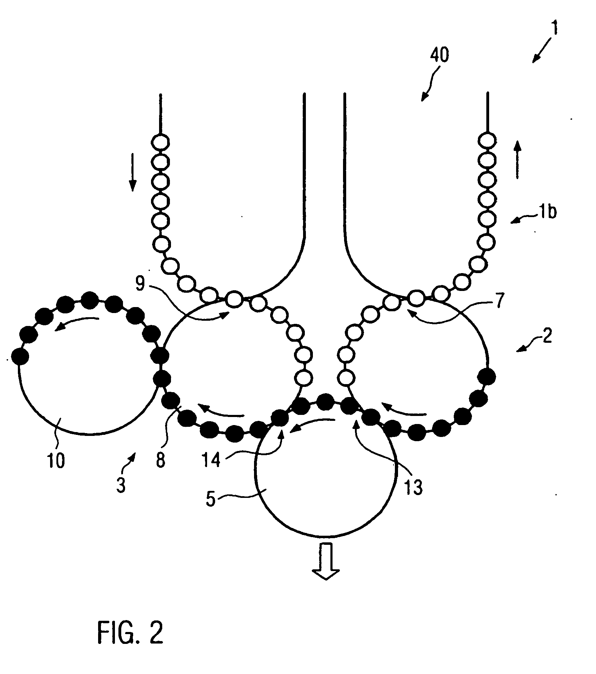

Fig. 2 zeigt ein zweites Ausführungsbeispiel 1b der erfindungsgemäßen Fördereinrichtung 1, das sich vom Ausführungsbeispiel der Fig. 1 lediglich durch einen abweichenden Puffer 40 unterscheidet. Gleiche bzw. vergleichbare Bauteile sind in Fig. 2 mit den gleichen Bezugszeichen wie in Fig. 1 bezeichnet und werden hinsichtlich ihrer Funktion und Ausgestaltung nicht nochmals erläutert.

Der Puffer 40 im Ausführungsbeispiel 1b ist ein so genannter dynamischer Puffer, d.h. ein Puffer, der in der Lage ist, seine Pufferkapazität nach Bedarf zu verändern. Derartige Puffer sind beispielsweise in der WO 2005/073113 oder der US 6 152 291 beschrieben. Die dort beschriebenen, dynamischen Puffer sind in der Lage, ihre Pufferkapazität durch Verändern der wirksamen Förderlänge für die Gegenstände zu verändern. Ein großer Vorteil derartiger dynamischer Puffer ist es, dass Geschwindigkeitsänderungen zwischen dem ersten und dem zweiten Förderer wesentlich einfacher ausgeglichen werden können. Derartige dynamische Puffer weisen beispielsweise einen Schlitten auf, der je nach Anlieferung- oder Abzugsgeschwindigkeit die wirksame Länge zwischen den Transferstellen 7 und 9 verkürzt oder erhöht, je nachdem ob der erste oder der zweite Förderer 2, 3 schneller läuft. Auch wird hier das Prinzip "first in - first out" konsequent durchgehalten. Auch kann der Abstand (Teilung) der Gegenstände im Puffer konstant gehalten werden, so dass keine Förderschnecke 12 oder dgl. erforderlich ist.

In Abwandlung der beschriebenen und gezeichneten Ausführungsbeispiele kann die erfindungsgemäße Fördereinrichtung auch für andere Förderaufgaben, insbesondere beim Handhaben von Flaschen, eingesetzt werden. Sie kann beispielsweise zwischen einem Flaschenfüller und einer Etikettiermaschine angeordnet sein. Auch eine Etikettiermaschine wäre in der Lage, mit Überleistung zu laufen, die z.B. 110 % der Leistung eines Flaschenfüllers entspricht, so dass bei laufendem Flaschenfüller der Puffer regeneriert werden kann.

## Patentansprüche

1. Fördereinrichtung (1) für Gegenstände (6), insbesondere Flaschen, mit einem ersten Förderer (2), einem zweiten Förderer (3) und einem dazwischen angeordneten Puffer (4, 40), der mit dem ersten und dem zweiten Förderer über eine erste Transferstelle (7, 9) in Verbindung steht, wobei der erste und der zweite Förderer (2, 3) getrennt voneinander über jeweils eine erste Transferstelle (7, 9) mit dem Puffer (4, 40) verbunden sind und ein den Puffer (4, 40) umgehender, schaltbarer Zwischenförderer (5) vorgesehen ist, **dadurch gekennzeichnet, dass** dieser mit dem ersten und dem zweiten Förderer (2, 3) über jeweils eine zweite Transferstelle (13, 14) in Förderverbindung steht.

2. Fördereinrichtung nach Anspruch 1, **dadurch gekennzeichnet, dass** die zweite Transferstelle (13, 14) an der dem Puffer (4, 40) in Förderrichtung (F) abgewandten Seite der ersten Transferstelle (7, 9) angeordnet ist.

3. Fördereinrichtung nach Anspruch 1 oder 2, **dadurch gekennzeichnet, dass** der Puffer (4, 40) ein staufähiger und insbesondere ein dynamischer Puffer ist.

4. Fördereinrichtung nach einem der Ansprüche 1 bis 3, **dadurch gekennzeichnet, dass** der Zwischenförderer (5) ein Sternförderer ist.

5. Fördereinrichtung nach einem der Ansprüche 1 bis 4, **dadurch gekennzeichnet, dass** der erste und/oder zweite Förderer (2, 3) ein Sternförderer ist.

6. Fördereinrichtung nach einem der Ansprüche 1 bis 5, **dadurch gekennzeichnet, dass** der Zwischenförderer (5) Aufnahmeeinrichtungen für die Gegenstände (6) aufweist, die an den zweiten Transferstellen (13, 14) unwirksam schaltbar sind.

7. Fördereinrichtung nach Anspruch 6, **dadurch gekennzeichnet, dass** die Aufnahmeeinrichtungen aus einer Aufnahmeposition für die Gegenstände (6) zurückziehbar sind.

8. Fördereinrichtung nach einem der Ansprüche 1 bis 7, **dadurch gekennzeichnet, dass** eine Vorrichtung (8, 12) zum Verändern der Teilung der geförderten Gegenstände (6) vorgesehen ist.

9. Vorrichtung zum Handhaben von Flaschen, mit einer Blasformmaschine und einem Flaschenfüller und einer zwischen beiden angeordneten Fördereinrichtung (1) nach einem der Ansprüche 1 bis 8.

## Claims

1. Conveying device (1) for objects (6), in particular bottles, comprising a first conveyor (2), a second conveyor (3) and a buffer (4, 40) arranged therebetween which is connected to the first and second buffers via a first transfer site (7, 9), wherein the first and second conveyors (2, 3) are connected to the buffer (4, 40) separately from one another via a respective first transfer site (7, 9), and comprising a switchable intermediate conveyor (5) which bypasses the buffer (4, 40), **characterised in that** the switchable intermediate conveyor (5) is in conveying connection with the first and second conveyors (2, 3) via a respective second transfer site (13, 14).

2. Conveying device according to claim 1, **characterised in that** the second transfer site (13, 14) is arranged at the side of the first transfer site (7, 9) facing away from the buffer (4, 40) in the conveying direction (F).

3. Conveying device according to claim 1 or 2, **characterised in that** the buffer (4, 40) has accumulating capacity and is, in particular, a dynamic buffer.

4. Conveying device according to one of the claims 1 to 3, **characterised in that** the intermediate conveyor (5) is a star wheel conveyor.

5. Conveying device according to one of the claims 1 to 4, **characterised in that** the first and/or second conveyor (2, 3) is a star wheel conveyor.

6. Conveying device according to one of the claims 1 to 5, **characterised in that** the intermediate conveyor (5) comprises take-up devices for the objects (6), said take-up devices being switchable into an ineffective state at the second transfer sites (13, 14).

7. Conveying device according to claim 6, **characterised in that** the take-up devices can be withdrawn from a take-up position for the objects (6).

8. Conveying device according to one of the claims 1 to 7, **characterised in that** a device (8, 12) for varying the spacing of the conveyed objects (6) is provided.

9. Device for handling bottles, comprising a blow-moulding machine, and a bottle filler and a conveying device (1) according to one of the claims 1 to 8 arranged therebetween.

## Revendications

1. Dispositif de transport (1) pour des objets (6) en particulier des bouteilles comportant un premier convoyeur (2), un second convoyeur (3) et un élément tampon (4, 40) monté entre ces convoyeurs et qui est relié au premier et au second convoyeur par un premier poste de transfert (7, 9), le premier et le second convoyeur (2, 3) étant reliés séparément à l'élément tampon (4, 40) par l'intermédiaire d'un premier poste de transfert respectif (7, 9), et un convoyeur intermédiaire (5) commutable contournant l'élément tampon (4, 40) étant prévu,
**caractérisé en ce que**
le convoyeur intermédiaire (5) est en liaison de transport avec le premier et le second convoyeur (2, 3) par l'intermédiaire d'un second poste de transfert (13, 14) respectif.

2. Dispositif de transport conforme à la revendication 1,
**caractérisé en ce que**
le second poste de transfert (13, 14) est situé du côté du premier poste de transfert (7, 9) situé à l'opposé de l'élément tampon (4, 40) dans la direction de transport (F).

3. Dispositif de transport conforme à la revendication 1 ou 2,
**caractérisé en ce que**
l'élément tampon (4, 40) est un élément tampon susceptible d'accumulation, et en particulier un élément tampon dynamique.

4. Dispositif de transport conforme à l'une des revendications 1 à 3,
**caractérisé en ce que**
le convoyeur intermédiaire (5) est un convoyeur stellaire.

5. Dispositif de transport conforme à l'une des revendications 1 à 4,
**caractérisé en ce que**
le premier et/ou le second convoyeur (2, 3) est(sont) un(des) convoyeur(s) stellaire(s).

6. Dispositif de transport conforme à l'une des revendications 1 à 5,
**caractérisé en ce que**
le convoyeur intermédiaire (5) comporte des dispositifs de réception des objets (6) qui peuvent être commutés de façon inactive sur le second poste de transfert (13, 14).

7. Dispositif de transport conforme à la revendication 6,
**caractérisé en ce que**
les dispositifs de réception peuvent être retirés d'une position de réception des objets (6).

8. Dispositif de transport conforme à l'une des revendications 1 à 7,
**caractérisé en ce qu'**
il comporte un dispositif (8, 12) pour modifier la répartition des objets (6) convoyés.

9. Dispositif de manipulation de bouteilles comportant une machine à souffler et un remplisseur de bouteilles ainsi qu'un dispositif de transport (1) conforme à l'une des revendications 1 à 8 monté entre ces deux éléments.
